# EUROPÄISCHE PATENTSCHRIFT

(11) **EP 1 624 277 B1**
(45) Veröffentlichungstag und Bekanntmachung des Hinweises auf die Patenterteilung: **12.10.2011**
(21) Anmeldenummer: 05016890.5
(22) Anmeldetag: 03.08.2005
(51) Int. Cl.: G01B 7/02

(54) **Vorrichtung zur Erkennung von Positionen eines beweglich geführten Teils**
Apparatus for determining the positions of an object moving along a path
Dispositif pour déterminer les positions d'un object guidé en déplacement

(30) Priorität: 04.08.2004 DE 202004012223 U; 25.08.2004 DE 202004013306 U
(43) Veröffentlichungstag der Anmeldung: 08.02.2006
(73) Patentinhaber: Liebherr-Werk Ehingen GmbH, 89584 Ehingen/Donau (DE)
(72) Erfinder: Morath, Erwin, 89584 Lauterach (DE)
(74) Vertreter: Herrmann, Uwe

(56) Entgegenhaltungen:
- EP-A- 0 753 472
- DE-U1- 29 710 694
- US-A1- 2003 035 015
- US-B1- 6 478 229
- US-B1- 6 641 042

## Beschreibung

Die Erfindung betrifft eine Vorrichtung zur Erkennung von Positionen eines beweglich geführten Teils mit einem Näherungssensor, der ein Ausgangssignal liefert, das ein Maß für den Abstand eines vor dem Näherungssensor befindlichen Objektes ist.

Eine derartige Vorrichtung ist beispielsweise aus der DE 198 30 981 C1 bekannt. Der in dieser Druckschrift offenbarte Näherungssensor dient zur Erfassung vordefinierter Positionen eines beweglich geführten Teils beispielsweise eines Fahrzeugkrans. Beispielsweise muss beim Ausfahren der Schüsse eines Teleskopauslegers die Bewegung der hierfür erforderlichen Hydraulikzylinder überwacht und gesteuert werden sowie auch die Position der Bolzen zum Verbolzen der jeweiligen Schüsse des Teleskopauslegers erfaßt werden. Bei der vorbekannten Vorrichtung wird das Ausgangssignal des Näherungssensors mittels eines A/D-Wandlers in digitale Ausgangswerte gewandelt und diese mit Referenzschwellen verglichen, wobei eine Fehlermeldung erfolgt, wenn die digitalen Ausgangswerte außerhalb zulässiger Referenzschwellen liegen, was durch eine Auswerteeinheit überprüft wird. Erfolgt eine fehlerhafte Wandlung der Signale im A/D-Wandler oder ein fehlerhafter Abgleich der digitalen Ausgangswerte mit Referenzschwellen, kann der Fall eintreten, dass keine Fehlermeldung abgegeben wird, obwohl der Näherungsschalter nicht korrekt arbeitet. Entsprechendes gilt für den Fall, dass der Näherungssensor insoweit fehlerhaft ableitet, als dass unabhängig von der Position des beweglich geführten Teils stets das selbe Ausgangssignal abgegeben wird, dessen digitale Werte innerhalb eines Toleranzbereiches liegen.

Aus der US 2003/0035015 A1 ist eine Vorrichtung zur Anpassung des Druckes bekannt, mit der ein Druckkopf auf die Oberfläche des zu bedruckenden Mediums gepresst wird. Dabei wird mittels eines Näherungssensors der Abstand eines RFID-Tags von dem Näherungssensor bestimmt und in Abhängigkeit davon der Anpressdruck eingestellt.

Die US 6,478,229 B1 betrifft die Einbettung von RFID-transpondern in ein Klebeband. Damit soll erreicht werden, dass mit dem Klebeband versehene Sendungen identifiziert werden können.

Aus der US 6,641,042 B1 ist ein Verfahren bekannt, mittels dessen ein auf einem Objekt befindlicher Transponder aktiviert wird, um das Objekt zu identifizieren. Darüber hinaus ist vorgesehen, das Objekt mit optischen Mitteln zu erfassen. Aus der EP 0 753 472 A1 ist ein Fördergurt bekannt, in den in Abständen zueinander Transponder eingettet sind. Bei Eintreten eines bestimmten Verschleißzustandes des Fördergurtes werden die Transponder zerstört oder fallen aus dem Fördergurt heraus. Auf diese Weise kann der Verschleiß des Fördergurtes ermittelt werden.

Die DE 297 10 694 U1 betrifft einen Näherungsschalter, der dadurch besonders manipulationssicher ausgestaltet ist, dass seine Schaltfunktion bei Annäherung an ein Objekt die Datenübertragung von einem an dem Objekt befindlichen Transponder voraussetzt.

Es ist daher die Aufgabe der Erfindung, eine Vorrichtung der eingangs genannten Art dahin gehend weiterzubilden, dass die Funktionskontrolle des Näherungsschalters verbessert wird.

Diese Aufgabe wird durch eine Vorrichtung mit den Merkmalen des Anspruchs 1 gelöst. Die erfindungsgemäße Vorrichtung zur Erkennung von Positionen eines beweglich geführten Teils mit einem Näherungssensor, der ein Ausgangssignal liefert, das ein Maß für den Abstand eines vor dem Näherungssensor befindlichen Objektes ist, weist weiterhin wenigstens einen auf dem beweglich geführten Teil angeordneten Transponder auf, wobei der Näherungssensor derart ausgeführt ist, dass die in den Transponder gespeicherten Daten mittels des Näherungssensors auslesbar sind. Aufgrund der vom Transponder erhaltenen Informationen kann überprüft werden ob der Näherungsschalter korrekt arbeitet. Eine Kontrolle des Näherungsschalters auf Funktion ist somit beispielsweise durch das in der DE 198 30 981 C1 beschriebene Verfahren möglich und zusätzlich auf der Grundlage der Kommunikation zwischen Näherungssensor und Transponder. In bevorzugter Ausgestaltung der Erfindung erfolgt eine Kontrolle des Schalters auf Funktion somit mit zwei unterschiedlichen Messverfahren. Dadurch erhöht sich die Sicherheit und der Diagnoseabdeckungsgrad, wodurch eine höhere Sicherheitsklasse erreichbar ist.

Bei dem Näherungssensor handelt es sich vorzugsweise um einen induktiven Sensor, der nach dem Prinzip des bedämpften LC-Oszillators arbeitet.

Erfindungsgemäß verfügt der Näherungssensor über einen Schwingkreis. Ferner ist ein den Schwingkreis steuernder Prozessor vorgesehen, mittels dessen der Schwingkreis mit einer ersten Frequenz betreibbar ist, in der der Näherungssensor zur Positionsbestimmung dient, und mit einer zweiten Frequenz betreibbar ist, in der der Näherungssensor zur Kommunikation mit dem Transponder dient. Induktive Näherungssensoren weisen einen harmonischen Oszillator auf, der mittels einer Sensorspule, die Bestandteil des Schwingkreises ist, ein hochfrequentes Wechselfeld erzeugt. Beim Eintritt von Metall in das Wechselfeld der Sensorspule wird dem System durch Wirbelstrombildung Energie entzogen, so dass die Schwingungsamplitude kleiner wird. Eine daraus resultierende Stromänderung wird in einer nachgeschalteten Elektronik ausgewertet. Erzeugt wird ein kontinuierliches Ausgangssignal, dass ein Maß für den Abstand des Objektes von der Messfläche des Sensors darstellt. Erfindungsgemäß dient der Näherungssensor ferner zur Kommunikation mit dem Transponder. Dazu kann der Näherungssensor in einer zweiten Frequenz bzw. bei einer gegenüber der ersten Frequenz modulierten Frequenz betrieben werden. Dadurch ist eine Kommunikation zwischen Näherungssensor und Transponder möglich, wobei diese Kommunikation dazu dient, Daten aus dem Transponder auszulesen und in bevorzugter Ausgestaltung der Erfindung ferner Daten in den Speicher des Transponders zu schreiben.

Dementsprechend ist in weiterer Ausgestaltung der Erfindung vorgesehen, dass der Transponder auslesbar und auch beschreibbar ist. Bei dem Transponder kann es sich um einen aktiven oder passiven Transponder handeln. Beispielsweise kann der Transponder als induktiv wirkender Transponder ausgeführt sein.

Besonders vorteilhaft ist es, wenn die in dem Transponder gespeicherten Daten das beweglich geführte Teil betreffen. Bei den Daten kann es sich beispielsweise um Identitätsnummern, Seriennummern, Qualitätsdaten sowie um Daten betreffend den Hersteller handeln.

Eine besonders vorteilhafte Anwendung der Erfindung ergibt sich daraus, dass die in dem Transponder gespeicherten Daten die Historie des beweglich geführten Teils betreffende Daten, insbesondere die dem Teil zugeordneten Lastkollekive umfassen. Auf diese Weise ist es möglich, die einem Teil, beispielsweise dem Schuss eines Kranauslegers zugeordneten Lastkollektive zu speichern und abzufragen, was aufgrund der Zuordnung des oder der Transponder zu einem beweglich geführten Teil möglich ist. Auf diese Weise lassen sich bei gebrauchten Vorrichtungen, beispielsweise gebrauchten Kranen, anhand der in den Transpondem abgelegten Daten Anhaltspunkte für das dem betreffenden Teil zugeordnete Lastkollektiv ermitteln, die die Grundlage für die Restwertermittlung der Vorrichtung bilden können.

In weiterer Ausgestaltung der Erfindung ist eine erste Auswerteeinheit vorgesehen, die die Ausgangswerte des Näherungssensors oder daraus abgeleitete Werte mit Referenzwerten vergleicht. Ferner ist eine zweite Auswerteeinheit vorgesehen, die das Transponderantwortsignal mit einem Referenzsignal vergleicht, wobei eine Fehlermeldung ausgegeben wird, wenn die Differenz zwischen den Ausgangswerten und den Referenzwerten einen Grenzwert übersteigt oder das Transponderantwortsignal nicht dem Referenzsignal entspricht. Bei der ersten und zweiten Auswerteeinheit kann es sich um ein und dasselbe Bauteil handeln.

Grundsätzlich ist es möglich, dass die Auswerteeinheit als Bauelement vorgesehen ist, das in geeigneter Weise mit dem Näherungsschalter in Verbindung steht. Ebenso ist es möglich, dass die Auswertung im Näherungsschalter selbst erfolgt, so dass der Näherungsschalter dementsprechend als intelligentes Bauteil ausgeführt ist. Entsprechend kann in weiterer Ausgestaltung der Erfindung die genannte erste oder zweite oder auch beide Auswerteeinheiten im Näherungsschalter integriert sein.

Weiterhin kann vorgesehen sein, dass es sich bei den aus den Ausgangswerten des Näherungssensors abgeleiteten Werten um digitale Ausgangswerte handelt und dass somit ein Analog-Digital-Wandler vorgesehen ist, der die Ausgangswerte des Näherungssensors in digitale Werte wandelt.

Der Näherungssensor steht vorzugsweise über einem Bus mit einer Steuereinheit in Verbindung. Dabei ist es besonders vorteilhaft, wenn die Busadresse automatisch durch den Transponder zugeordnet ist. Weiterhin besteht eine vorteilhafte Ausgestaltung der Erfindung darin, dass der Näherungsschalter einem Einbauort automatisch auf der Grundlage der in dem Transponder gespeicherten Daten zugeordnet ist. Auf diese Weise ist es möglich, an den gewünschten Einbauorten Näherungssensoren bzw. -schalter vorzusehen, die zunächst noch keine Zuordnung zu einer bestimmten Einbauposition erfahren haben und denen Parameter dementsprechend noch nicht zugeordnet sind. Nach dem Einbau der Näherungsschalter wird der zugehörige Transponder erkannt und es erfolgt eine automatische Zuordnung des Näherungsschalters auf den entsprechenden Einbauort. Aus einer zentralen Steuereinheit können die zugehörigen Parameter des Näherungsschalters bzw. -sensors ausgelesen und diesem zugeordnet werden, wie beispielsweise der Schaltabstand, die Schaltschwelle und weitere Funktionen. Entsprechendes gilt für die automatische Zuordnung der Busadresse durch den Transponder. Dementsprechend ist es möglich, dem Näherungssensor zunächst keine Adresse zu zuweisen und eine automatische Zuordnung der Busadresse mittels des Transponders vorzunehmen.

Grundsätzlich besteht die Möglichkeit, dass die Busadresse derart zugewiesen wird, dass der Transponder mittels der Näherungsschalter abgefragt bzw. ausgelesen wird. In diesem Fall haben die Näherungsschalter eine Default-Adresse. Ebenso ist es möglich und besonders vorteilhaft, eine direkte Zuordnung vorzunehmen. In diesem Fall haben die Näherungsschalter keine Default-Adresse und die Transponder werden selbständig ausgelesen.

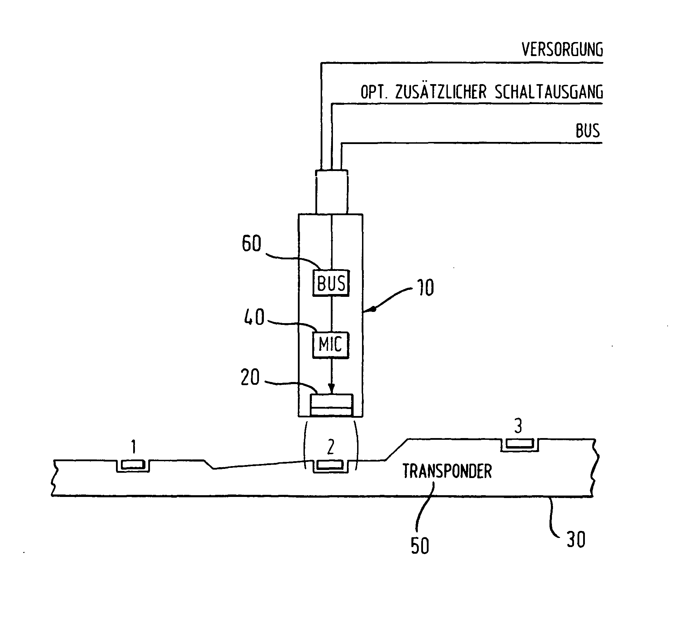

Weitere Einzelheiten und Vorteile der Erfindung werden anhand eines in der Zeichnung dargestellten Ausführungsbeispiels erläutert. Die einzige Figur zeigt:
eine schematische Darstellung des Näherungssensors sowie des Schaltteils mit Transponder.

Der Näherungsschalter 10 weist einen Näherungssensor 20 auf, der nach dem Prinzip des bedämpften LC Oszillators arbeitet. Der harmonische Oszillator erzeugt in der Sensorspule, die Bestandteil des LC-Schwingkreises ist, ein hochfrequentes Wechselfeld. Wird das als Bedämpfungsfläche dienende Schaltteil 30 in das Wechselfeld der Sensorspule eingeführt, wird dem System durch Wirbelstrombildung Energie entzogen, so dass die Schwinungsamplitude kleiner wird. Die daraus resultierende Stromänderung wird in einer nachgeschalteten Elektronik ausgewertet.

Das in der Zeichnung dargestellte Schaltteil 30 weist drei Vorzugspositionen bzw. Elemente 1, 2, 3 auf. Die Zeichnung zeigt den Näherungssensor 20 in einer Position, in dem der Abstand der Messfläche des Sensors 20 zu dem Element 2 ermittelt wird. Die Elemente 1, 2, 3 können den bzw. die Transponder aufweisen. Ferner ist es möglich, den oder die Transponder zusätzlich zu den Elementen 1, 2, 3 auf dem Schaltteil 30 anzuordnen.

Der Näherungssensor 20 gibt innerhalb seines Messbereichs ein kontinuierliches Ausgangssignal ab, das als Maß für den Abstand eines vor dem Näherungssensor 20 befindlichen Objektes dient. Er dient zur Erkennung von vordefinierten Positionen des beweglich geführten Schaltteils 30. Dabei ist das Schaltteil 30 derart ausgeführt, dass sich zumindest in den vordefinierten Positionen das Ausgangssignal ändert.

Auf dem Schaltteil 30 befindet sich ein Transponder 50, der das Schaltteil 30 betreffende Daten speichert. Bei diesen Daten kann es sich beispielsweise um Daten bezüglich des Herstellers, die Identitätsnummer, die Seriennummer, Qualitätsdaten sowie auch um Lastkollektive, die dem Teil zugeordnet sind, handeln.

Auf dem Schaltteil 30 kann ein oder auch mehrere Transponder 50 angeordnet sein.

Wie aus der Figur weiter ersichtlich, steht der Sensor 20 mit dem Prozessor (MIC) 40 in Verbindung. Der Prozessor 40 steuert den Sensor 20 derart, dass das übliche Verfahren eines Näherungsschalters anwendbar ist, wie es beispielsweise aus der DE 198 30 981 C1 bekannt ist. In diesem Betriebsmodus dient der Sensor 20 zur Erfassung des Abstandes zwischen Sensor 20 und dem Element 2 des Schaltteils 30 bzw. zur Positionserkennung des Schaltteils 30. Der Sensor 20 liefert ein kontinuierliches Ausgangssignal, das ein Maß für den Abstand zwischen der Meßfläche des Sensors 20 und dem Element 2 ist. Dabei ist vorzugsweise vorgesehen, dass das beweglich geführte Teil 30 derart ausgestaltet ist, das sich zumindest an den vordefinierten Positionen das Ausgangssignal des Sensors 20 ändert.

Ferner ist ein nicht dargestellter A/D-Wandler vorgesehen, der das Ausgangssignal des Sensors 20 in digitale Ausgangswerte wandelt.

Des weiteren ist eine Auswerteeinheit vorgesehen, die die digitalen Ausgangswerte zur Positionserkennung mit abgespeicherten Referenzschwellen vergleicht, wobei eine Fehlermeldung erfolgt, wenn die digitalen Ausgangswerte außerhalb zulässiger Referenzschwellen liegen.

Der Mikroprozessor 40 steuert den Sensor 20 in einem weiteren Betriebsmodus derart, dass durch Änderung der Frequenz und dementsprechende Modulation die Tranponderdaten auslesbar sind und der Transponder 50 beschreibbar ist. Dementsprechend ist in einem zweiten Betriebsmodus eine Kommunikation zwischen Sensor 20 und Transponder 50 herstellbar.

Daraus ergibt sich unter anderem der Vorteil, dass der Näherungsschalter 10 mit zwei unterschiedlichen Messvefahren auf seine Funktion überprüft werden kann. Dadurch resultiert eine Erhöhung der Sicherheit sowie des Diagnoseabdeckungsgrades, wodurch eine höhere Sicherheitsklasse erreichbar ist.

Denkbar ist beispielsweise, dass der Sensor 20 ein vorgegebenes Signal an den Transponder 50 aussendet und ein definiertes Signal vom Transponder 50 zurückerhält bzw. ausliest. Wird dieser Identifikationsvorgang nicht erfolgreich abgeschlossen, kann vorgesehen sein, dass dies in einer Auswerteeinheit festgestellt wird und eine Fehlermeldung ausgegeben wird.

Bei dem Transponder 50 kann es sich beispielsweise um einen induktiv wirkenden Transponder handeln.

Wie aus der Zeichnung weiter ersichtlich, steht der Mikroprozessor 40 mit dem Bus 60 in Verbindung. Der Bus 60 verbindet den Prozessor 40 mit einer nicht dargestellten Steuereinheit, die beispielsweise als zentraler Rechner ausgeführt sein kann.

Der Näherungsschalter 10 weist wie aus der Figur ersichtlich eine Versorgung, einen optischen zusätzlichen Schaltausgang sowie den genannten Bus zur Verbindung mit einem zentralen Rechner auf.

Nach der Montage des Näherungsschalters 10 an einem Einbauort erkennt der Näherungsschalter 10 bzw. dessen Sensor 20 den Transponder 50 und erhält von diesem Informationen hinsichtlich des Einbauortes. Diese Informationen werden an die Steuereinheit weitergeleitet und es werden dem Näherungsschalter 10 sodann Parameter zugeordnet, wie beispielsweise der Schaltabstand, die Schaltschwelle sowie weitere Funktionen.

Entsprechendes gilt für die Zuordnung einer Busadresse. Aufgrund des Vorhandenseins des oder der Transponder 50 ist es möglich, nach Erkennen des Transponders 50 durch den Sensor 20 eine automatische Zuordnung einer Busadresse vorzunehmen.

Eine besonders vorteilhafte Ausgestaltung der Erfindung ergibt sich dann, wenn die Transpondereigenschaft dahingehend genutzt wird, dass Lastkollektive, die dem Teil zugeordnet sind, gespeichert sind. Hierzu ist es erforderlich, dass der Transponderspeicher auslesbar und beschreibbar ist. Aufgrund der Zuordnung des oder der Transponder zu einem beweglich geführten Teil, beispielsweise einem Schuss eines Kranauslegers ist es möglich, Informationen über die bisherigen Belastungen, Lastspitzen, etc. des entsprechenden Bauteils zu gewinnen, was beispielsweise dann von Bedeutung sein kann, wenn eine Bewertung gebrauchter Teile vorzunehmen ist.

Die vorliegende Erfindung ermöglicht aufgrund des Vorhandenseins des Transponders am Schaltteil nicht nur die Erkennung von Abstand und Position des Schaltteils, sondern auch dessen Identifikation.

## Patentansprüche

1. Vorrichtung zur Erkennung von Positionen eines beweglich geführten Teils (30) mit einem Näherungssensor (20), der innerhalb seines Messbereiches ein kontinuierliches Ausgangssignal liefert, das ein Maß für den Abstand eines vor dem Näherungssensor (20) befindlichen Objektes (30) ist, und mit wenigstens einem auf dem beweglich geführten Teil (30) anordenbaren Transponder (50), wobei in dem Transponder (50) das bewegliche Teil (30) betreffende Daten gespeichert sind und der Näherungssensor (20) derart ausgeführt ist, dass die in dem Transponder (50) gespeicherten Daten mittels des Näherungssensors (20) auslesbar sind, **dadurch gekennzeichnet,**
**dass** der Näherungssensor (20) über einen Schwingkreis verfügt und dass ein den Schwingkreis steuernder Prozessor (40) vorgesehen ist, mittels dessen der Schwingkreis mit einer ersten Frequenz betreibbar ist, in der der Näherungssensor (20) zur Positionsbestimmung dient und das kontinuierliche Ausgangssignal liefert, und mit einer zweiten Frequenz betreibbar ist, in der der Näherungssensor (20) zur Kommunikation mit dem Transponder (50) dient.

2. Vorrichtung nach Anspruch 1, **dadurch gekennzeichnet, dass** der Transponder (50) auslesbar und beschreibbar ist.

3. Vorrichtung nach einem der vorhergehenden Ansprüche, **dadurch gekennzeichnet, dass** es sich bei dem Transponder (50) um einen passiven, insbesondere um einen induktiv wirkenden Transponder, oder um einen aktiven Transponder handelt.

4. Vorrichtung nach einem der vorhergehenden Ansprüche, **dadurch gekennzeichnet, dass** die in dem Transponder (50) gespeicherten Daten die Identitätsnummer, Seriennummer, Qualitätsdaten sowie Daten betreffend den Hersteller des beweglich geführten Teils (30) umfassen.

5. Vorrichtung nach einem der vorhergehenden Ansprüche, **dadurch gekennzeichnet, dass** die in dem Transponder (50) gespeicherten Daten die Historie des beweglich geführten Teils (30) betreffende Daten, insbesondere die dem Teil (30) zugeordneten Lastkollektive umfassen.

6. Vorrichtung nach einem der vorhergehenden Ansprüche, **dadurch gekennzeichnet, dass** eine erste Auswerteeinheit vorgesehen ist, die die Ausgangswerte des Nährungsensors (20) oder daraus abgeleitete Werte mit Referenzwerten vergleicht, und dass eine zweite Auswerteeinheit vorgesehen ist, die das Transponderantwortsignal mit einem Referenzsignal vergleicht, wobei eine Fehlermeldung ausgegeben wird, wenn die Differenz zwischen den Ausgangwerten und den Referenzwerten einen Grenzwert übersteigt oder wenn das Transponderantwortsignal nicht dem Referenzsignal entspricht.

7. Vorrichtung nach Anspruch 6, **dadurch gekennzeichnet, dass** die erste und die zweite Auswerteeinheit durch ein Bauteil realisiert sind.

8. Vorrichtung nach Anspruch 6 oder 7, **dadurch gekennzeichnet, dass** es sich bei den aus den Ausgangswerten des Näherungssensors (20) abgeleiteten Werten um digitale Werte handelt, und dass ein Analog-Digital-Wandler vorgesehen ist, der die Ausgangswerte des Näherungssensors (20) in digitale Werte wandelt.

9. Vorrichtung nach einem der vorhergehenden Ansprüche, **dadurch gekennzeichnet, dass** eine Steuereinheit vorgesehen ist, die mit dem den Näherungssensor (20) umfassenden Näherungsschalter (10) in Verbindung steht.

10. Vorrichtung nach Anspruch 9, **dadurch gekennzeichnet, dass** die Verbindung durch einen Bus (60) realisiert ist.

11. Vorrichtung nach Anspruch 10, **dadurch gekennzeichnet, dass** die Busadresse automatisch auf der Grundlage der in dem Transponder (50) gespeicherten Daten zugeordnet ist.

12. Vorrichtung nach einem der vorhergehenden Ansprüche, **dadurch gekennzeichnet, dass** der den Näherungssensor (20) aufweisende Näherungsschalter (10) einem Einbauort automatisch auf der Grundlage der in dem Transponder (50) gespeicherten Daten zugeordnet ist.

## Claims

1. A device for detecting positions of a movably guided part (30), comprising a proximity sensor (20) which supplies an output signal continuous within its measurement range, which is a measure for the distance of an object (30) located in front of the proximity sensor (20), and comprising at least one transponder (50) to be arranged on the movably guided part (30), wherein data concerning the movable part (30) are stored in the transponder (50) and the proximity sensor (20) is configured such that the data stored in the transponder (50) can be read out by means of the proximity sensor (20), **characterized in**
**that** the proximity sensor (20) includes an oscillating circuit and that a processor (40) controlling the oscillating circuit is provided, by means of which the oscillating circuit can be operated with a first frequency at which the proximity sensor (20) serves for detecting a position and supplies the continuous output signal, and can be operated with a second frequency at which the proximity sensor (20) serves for communication with the transponder (50).

2. The device according to claim 1, **characterized in that** the transponder (50) is readable and writable.

3. The device according to any of the preceding claims, **characterized in that** the transponder (50) is a passive, in particular an inductively acting transponder or an active transponder.

4. The device according to any of the preceding claims, **characterized in that** the data stored in the transponder (50) include the identification number, the serial number, quality data as well as data concerning the manufacturer of the movably guided part (30).

5. The device according to any of the preceding claims, **characterized in that** the data stored in the transponder (50) comprise data concerning the history of the movably guided part (30), in particular the load collectives allocated to the part (30).

6. The device according to any of the preceding claims, **characterized in that** a first evaluation unit is provided, which compares the output values of the proximity sensor (20) or values derived therefrom with reference values, and that a second evaluation unit is provided, which compares the transponder response signal with a reference signal, wherein an error message is produced when the difference between the output values and the reference values exceeds a limit value or when the transponder response signal does not correspond to the reference signal.

7. The device according to claim 6, **characterized in that** the first and second evaluation units are realized by one component.

8. The device according to claim 6 or 7, **characterized in that** the values derived from the output values of the proximity sensor (20) are digital values and that an analog-to-digital converter is provided, which converts the output values of the proximity sensor (20) into digital values.

9. The device according to any of the preceding claims, **characterized in that** a control unit is provided, which is connected with the proximity switch (10) comprising the proximity sensor (20).

10. The device according to claim 9, **characterized in that** the connection is realized by a bus (60).

11. The device according to claim 10, **characterized in that** the bus address is allocated automatically on the basis of the data stored in the transponder (50).

12. The device according to any of the preceding claims, **characterized in that** the proximity switch (10) including the proximity sensor (20) is automatically allocated to a place of installation on the basis of the data stored in the transponder (50).

## Revendications

1. Dispositif de détection de positions d'une partie guidée mobile (30) avec un capteur d'approche (20) qui fournit à l'intérieur de sa zone de mesure un signal de sortie continu, qui est une mesure de l'écart d'un objet (30) se trouvant en amont du capteur d'approche (20), et avec au moins un transpondeur (50) pouvant être disposé sur la partie guidée mobile (30), où sont stockées dans le répondeur (50) des données se rapportant à la partie mobile (30), et le capteur d'approche (20) est réalisé de telle sorte que les données stockées dans le transpondeur (50) peuvent être lues au moyen du capteur d'approche (20), **caractérisé en ce que** le capteur d'approche (20) dispose d'un circuit oscillant, et **en ce qu'**un processeur (40) commandant le circuit oscillant est prévu, au moyen duquel le circuit oscillant peut être amené à fonctionner avec une première fréquence, où le capteur d'approche (20) sert à la détermination de la position et fournit le signal de sortie continu, et peut être amené à fonctionner avec une deuxième fréquence dans laquelle le capteur d'approche (20) sert à la communication avec le répondeur (50).

2. Dispositif selon la revendication 1, **caractérisé en ce que** le répondeur (50) est lisible et inscriptible.

3. Dispositif selon l'une des revendications précédentes, **caractérisé en ce que** dans le cas du répondeur (50) il s'agit d'un répondeur passif, en particulier à effet d'induction, ou d'un répondeur actif.

4. Dispositif selon l'une des revendications précédentes, **caractérisé en ce que** les données stockées dans le répondeur (50) comprennent le numéro d'identité, le numéro de série, les données de qualité ainsi que des données concernant le fabricant de la partie guidée mobile (30).

5. Dispositif selon l'une des revendications précédentes, **caractérisé en ce que** les données stockées dans le répondeur (50) comprennent l'historique des données concernant la partie guidée mobile (30), en particulier les collectifs associés à la partie (30).

6. Dispositif selon l'une des revendications précédentes, **caractérisé en ce qu'**une première unité d'évaluation est prévue qui compare les valeurs de départ du capteur d'approche (20) ou des valeurs dérivées de celles-ci avec des valeurs de référence, et **en ce qu'**une deuxième unité d'évaluation est prévue qui compare le signal de réponse du répondeur avec un signal de référence, où une information d'erreur est émise lorsque la différence entre les valeurs de départ et les valeurs de référence dépasse une valeur limite ou lorsque le signal de réponse du transpondeur ne correspond pas au signal de référence.

7. Dispositif selon la revendication 6, **caractérisé en ce que** la première et la deuxième unité d'évaluation sont réalisées par un composant.

8. Dispositif selon la revendication 6 ou 7, **caractérisé en ce que** dans le cas des valeurs dérivées des valeurs de départ du capteur d'approche (20), il s'agit de valeurs numériques, et **en ce qu'**un convertisseur analogique-numérique est prévu qui transforme les valeurs de départ du capteur d'approche (20) en valeurs numériques.

9. Dispositif selon l'une des revendications précédentes, **caractérisé en ce qu'**une unité de commande est prévue qui est en liaison avec le commutateur d'approche (10) entourant le capteur d'approche (20).

10. Dispositif selon la revendication 9, **caractérisé en ce que** la liaison est réalisée par un bus (60).

11. Dispositif selon la revendication 10, **caractérisé en ce que** l'adresse du bus est associée automatiquement sur la base des données stockées dans le répondeur (50).

12. Dispositif selon l'une des revendications précédentes, **caractérisé en ce que** le commutateur d'approche (10) présentant le capteur d'approche (20) est associé à un emplacement de montage automatiquement sur la base des données stockées dans le répondeur (50).
